# EUROPEAN PATENT SPECIFICATION

(11) **EP 1 006 446 B1**
(45) Date of publication and mention of the grant of the patent: **16.04.2003**
(21) Application number: 99309577.7
(22) Date of filing: 30.11.1999
(51) Int. Cl.: G06F 11/22, G09B 9/00

(54) **Remote assistant**
Fernassistent
Aide à distance

(30) Priority: 30.11.1998 US 201378
(43) Date of publication of application: 07.06.2000
(73) Proprietor: GENERAL ELECTRIC COMPANY, Schenectady, NY 12345 (US)
(72) Inventor: Zale, Lawrence Paul, Clifton Park, New York 12065-5823 (US)
(74) Representative: Pedder, James Cuthbert

(56) References cited:
- US-A- 5 619 183
- "LIGHTED KEYS MAKE COMPUTER KEYBOARDS MORE USER-FRIENDLY" RESEARCH DISCLOSURE,GB,INDUSTRIAL OPPORTUNITIES LTD. HAVANT, no. 291, 1 July 1988 (1988-07-01), page 477 XP000111021 ISSN: 0374-4353
- BUTLER H: "VIRTUAL REMOTE: THE CENTRALIZED EXPERT" HEWLETT-PACKARD JOURNAL,US,HEWLETT-PACKARD CO. PALO ALTO, vol. 45, no. 5, 1 October 1994 (1994-10-01), pages 75-82, XP000471161

## Description

The present invention relates to remote instruction to field engineers on specific equipment.

Many large, industrial complex machines such as steam turbines, generators, locomotives, ships, oil refineries, iron mills, stamping mills, factory tools are either impossible or impractical to bring into a shop for in-house measurements. There are many situations in which a required procedure should be performed on these complex machines. This may be for purposes of maintenance, upkeep, servicing, or debugging. Typically there are embedded microprocessors in these complex machines that are capable of running automated tests and calibration programs. However, not all these programs are automated. Many require an on-site operator (typically a field engineer) to interact with a control panel.

There also are other cases in which the embedded microprocessor is busy running the automated tests and calibration programs, while the operator is required to perform higher level functions, such as interacting with the control panel to administer the tests.

There is also the case where the malfunctioning apparatus is the microprocessor, or affects the way the microprocessor runs. In this case, even though there is an automated test program, a 'live', on-site user is required.

Since many of these complex machines are located in remote sites, it is difficult to provide an experienced on-site user quickly.

There are times when there is an on-site operator, however the on-site operator is experienced in performing a required procedure. In this case it is possible to 'taik'the user through the process over the phone, however it becomes difficult to explain which input devices to actuate, the actuation sequence and the proper timing.

US-A-5 619 183 discloses a remote instruction system corresponding to the preamble of claim 1.

Therefore, there is currently a need for the system that provides detailed instruction to a user at a remote site.

This is achieved by the subject-matter of independent claim 1. Features of preferred embodiments are defined by the dependent claims.

According to the invention, there is provided a remote instruction system for indicating the proper input devices at remote sites to activate with proper sequence and timing comprising:
a) at least one remote site, each remote site having:
   i. a remote control panel having a plurality of remote input devices;
   ii. each remote input device having an identifier means capable of being remotely activated and each functioning to identify a specific remote input device;
b) a remote link connected to the identifier means for transmitting information to and from remote site;
c) a base site connected to remote link having:
   activating means for activating identifier means corresponding to a specified remote input device;
   characterised in that the activating means comprises a plurality of base input devices each corresponding to a remote input device, functioning to activate corresponding identifier means.

At the base there is a similar control panel having the same input devices connected to the corresponding identification means at the remote site. A user at the base activates input devices identifying the corresponding input devices at the control panel of the remote site, thereby training a user to perform a complex procedure.

The sequence of input devices actuated may be prestored and played back as an instructional sequence. The present invention not only indicates the proper input devices to actuate, but also the sequence and timing.

The present invention seeks to provide instruction to a remotely located user.

The present invention further specifically seeks, in specific emodiment thereof, to indicate input devices to be actuated, along with the sequence and timing of actuation from a remote site.

The present invention also seeks in specific embodiments thereof to 'walk' a user through a detailed procedure.

The invention will now be described in greater detail, by way of example, with reference to the drawings, in which:-

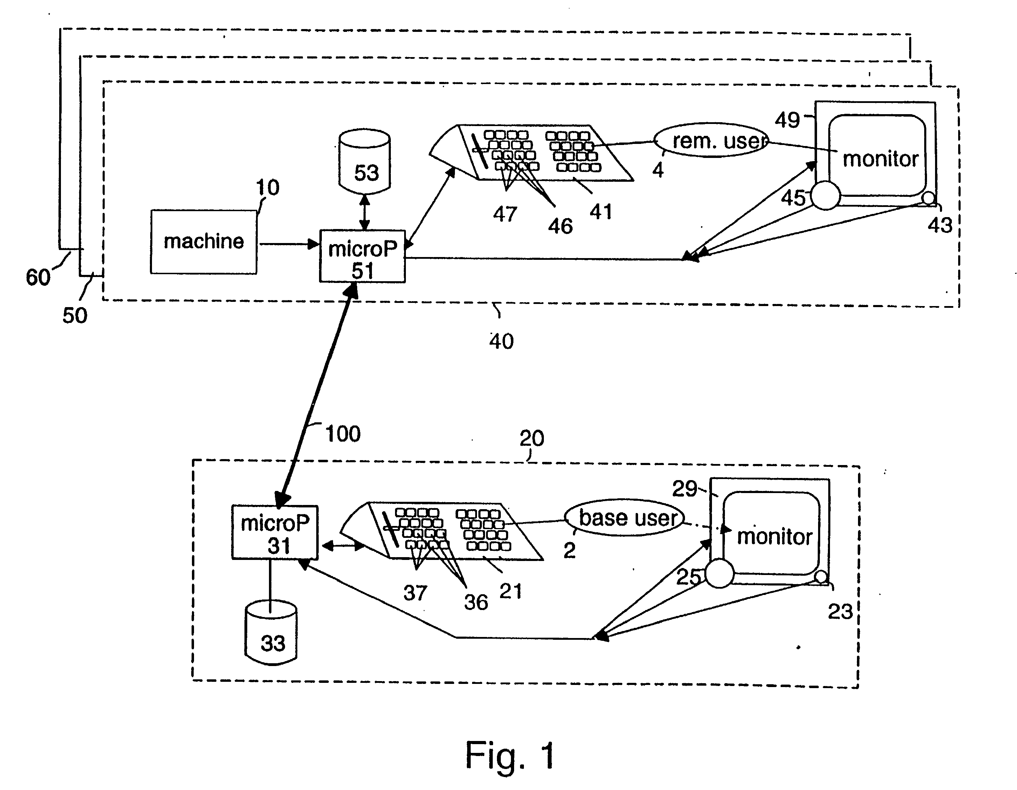

Figure 1 is one embodiment of the present invention in operation providing remote instruction to a user at a remote site.

With the advent of Remote Service and Diagnostics, a whole world of automated possibilities for remote instruction opens. By marking each actuator on an on-site control panel with a light, or other identifier means, it is possible to identify the proper input devices to actuate the correct sequence and timing.

In Figure 1, a simplified block diagram of the present invention is shown. At least one remote site 40, 50, 60 is shown connected to a main base 20. Each remote site 40 is connected to base 20 with a remote link 100 which may be either hard wired, a radio link, or a combination of the two.

A remote user 3 located in remote site 40 interacts with control panel 41 having a plurality of input devices 47 for complex machine 10.

In the preferred embodiment, base 20 has a very similar control panel 21 and input devices 37 and monitor 29.

A base microprocessor 31 runs a program stored on base storage device 33 which causes selected identifier means 46 of each remote input device 47 to light up, or otherwise identify the proper input devices 47, when the corresponding base input devices 37 of base control panel 21 are actuated.

Remote link 100 provides the necessary connection between base microprocessor 31 and input device 41 and monitor 43.

In an alternative embodiment, remote input devices 47 on remote control panel 41 are identified by other means.

In another embodiment, a remote CRT monitor 49 may be used to provide an image of a control panel at the remote site 20. The proper input devices to be actuated are indicated on the CRT image. This allows the remote user 4 to activate the proper remote input devices 47 while watching the CRT monitor 49.

In still another embodiment, the control panel 41 at the remote site 40, may have a means for switching from 'live' to 'simulation' mode. In this case the control panel signals are fed to a simulation program that provides simulates the effects of the input from remote user 4 on the machine. Both the remote control panel 41 input and the simulation output may be stored on local storage device 53. This information may also be sent over remote link 100 to the base 20 and stored on storage device 33. This allows an analysis of the session offline later.

In another embodiment, sound is transmitted over remote link 100 allowing voice communication between base user 2, and remote user 4. Base user 2 may now verbally communicate with the remote user 4 by speaking into a base microphone 23 concurrent with activating identifier means 46. A remote speaker 45 plays the speech to the remote user 4.

Similarly, there may be a remote microphone 43 at remote site 40 connected to remote link 100 and a base speaker 25 located at base 20. This would also allow the remote user 4 to ask questions of base user 2 during execution of a procedure.

The sequence of input actuation, along with the user's responses are referred to as a 'session'. In an optional embodiment, sessions may be stored and played back to refresh the memory of a remote user 4 on a specific procedure. This would be similar to 'brushing up' on a procedure.

These sessions may be played back to analyze errors in the performance of remote user 4. Many sessions may be stored and compared to show the progress of user 4 over time.

## Claims

1. A remote instruction system for indicating the proper input devices at remote sites to activate with proper sequence and timing comprising:
a) at least one remote site (40, 50, 60), each remote site having:
i. a remote control panel (41) having a plurality of remote input devices (47);
ii. each remote input device (47) having an identifier means (46) capable of being remotely activated and each functioning to identify a specific remote input device (47);
b) a remote link (100) connected to the identifier means (46) for transmitting information to and from remote site (40, 50, 60);
c) a base site (20) connected to the remote link (100) having:
activating means for activating identifier means corresponding to a specified remote input device
**characterised in that** the activating means comprises:
a plurality of base input devices (37) each corresponding to a remote input device (47), functioning to activate corresponding identifier means (46).

2. The remote instruction system of claim 1 further comprising:
a base microphone (23) located at base site (20), for capturing the voice of the base user;
a remote link (100) coupled to base microphone (23) for transmitting voice communication concurrently with the transmission of other information to, and from the remote site (40, 50, 60); and
a remote speaker (45) coupled to the remote link (100) for receiving the voice communications from the base (20) and playing them at the remote site (40, 50, 60)

3. The remote instruction system of claim 2 further comprising:
a remote microphone (43) located at the remote site (40, 50, 60) for capturing the voice of remote user;
a remote link (100) coupled to remote microphone (43), for transmitting voice communication concurrently with the transmission of the information to and from the remote site (40, 50, 60); and
a base speaker (45) coupled to the remote link (100) for receiving the voice communications from the base (20) and playing them at the remote site (40, 50, 60).

4. The remote instruction system of any preceding claim further comprising:
a) a base storage device (33) at the base site (20) having pre-stored sequences of remote input device activation and timing;
b) a microprocessor (31) at the base site (20) coupled to the storage device (33), a remote link (100) for receiving and transmitting the pre-stored sequences of remote input device activation and timing through remote link (100) to the remote site (40, 50, 60).

5. The remote instruction system of claim 4 further comprising:
a) a storage device (53) at the remote site (40, 50, 60) capable of storing sequences of actuator activation and timing;
b) a microprocessor (51) at the remote site (40, 50, 60) coupled to the remote link (100) the storage device (53), and the identifier means (46), operating to receive the transmitted pre-stored sequences from the remote link (100), store them in storage device (53), retrieve the stored sequences at a later time, and play back the sequence, thereby activating the identifier means (46) according to the stored sequence.

6. The remote instruction system of any preceding claim wherein the identifier means (46) comprises: a plurality of lights each corresponding to a remote input device (47), each coupled to the base (20) through the remote link (100) and capable of being activated at the base (20).

7. The remote instruction system of any one of claims 1 to 5 wherein the identifier means comprises:
a CRT monitor (49) coupled to the base (20) through the remote link (100) displaying an image of the plurality of remote input devices (47) and highlighting the remote input devices (47) which are to be actuated.

## Patentansprüche

1. Fernbefehlssystem zum Anzeigen der richtigen Eingabevorrichtungen an entfernten Orten, um die richtige Sequenz und Zeitsteuerung zu aktivieren, enthaltend:
a) wenigstens einen entfernten Ort (40, 50, 60), wobei jeder entfernte Ort enthält:
i. eine Fernsteuertafel (41) mit mehreren Ferneingabevorrichtungen (47),
ii. wobei jede Ferneingabevorrichtung (47) eine Identifiziereinrichtung (46) aufweist, die aus der Ferne aktiviert werden kann und die jeweils die Funktion hat, eine spezielle Ferneingabevorrichtung (47) zu identifizieren,
b) eine Fernverbindung (100), die mit der Identifiziereinrichtung (46) verbunden ist, zum Übertragen von Information zu und von dem entfernten Ort (40, 50, 60),
einen Basisort (20), der mit der Fernverbindung (100) verbunden ist und enthält:
eine Aktivierungseinrichtung zum Aktivieren der Identifiziereinrichtung entsprechend einer speziellen Ferneingabevorrichtung,
**dadurch gekennzeichnet, daß** die Aktivierungseinrichtung enthält:
mehrere Basis-Eingabevorrichtungen (37), die jeweils einer Ferneingabevorrichtung (47) entsprechen und die Funktion haben, eine entsprechende Identifiziereinrichtung (46) zu aktivieren.

2. Fernbefehlssystem nach Anspruch 1, ferner enthaltend:
ein Basis-Mikrofon (23), das an dem Bais-Ort angeordnet ist, zum Einfangen der Sprache des Basis-Benutzers,
eine Fernverbindung (100), die mit dem Basis-Mikrofon (23) verbunden ist, zum Senden von Sprach-Kommunikation gleichzeitig mit der Übertragung von anderer Information zu und von dem entfernten Ort (40, 50, 60), und
einen Fernsprecher (45), der mit der Fernverbindung (100) verbunden ist, zum Empfangen von Sprach-Kommunikation von der Basis (20) und Abspielen an dem entfernten Ort (40, 50, 60).

3. Fernbefehlssystem nach Anspruch 2, ferner enthaltend:
ein Fern-Mikrofon (43), das an dem entfernten Ort (40, 50, 60) angeordnet ist, zum Einfangen der Sprache des Fern-Benutzers,
eine Fernverbindung (100), die mit dem Fern-Mikrofon (43) verbunden ist, zum Senden von Sprach-Kommunikation gleichzeitig mit der Übertragung von anderer Information zu und von dem entfernten Ort (40, 50, 60), und
einen Basissprecher (45), der mit der Fernverbindung (100) verbunden ist, zum Empfangen von Sprach-Kommunikation von der Basis (20) und Abspielen an dem entfernten Ort (40, 50, 60).

4. Fernbefehlssystem nach einem der vorstehenden Ansprüche, ferner enthaltend:
a) eine Basis-Speichervorrichtung (33) an dem Basis-Ort (20) mit vorgespeicherten Sequenzen von Aktivierung und Zeitsteuerung der Ferneingabevorrichtung,
b) einen Mikroprozessor (31) an dem Basis-Ort (20), der mit der Speichervorrichtung (33) verbunden ist, eine Fernverbindung (100) zum Senden und Empfangen der vorgespeicherten Sequenzen der Aktivierung und Zeitsteuerung der Ferneingabeeinrichtung durch die Fernverbindung (100) zu dem entfernten Ort (40, 50, 60).

5. Fernbefehlssystem nach Anspruch 4, ferner enthaltend:
a) eine Speichervorrichtung (53) an dem entfernten Ort (40, 50, 60), die Sequenzen von Aktuator-Aktivierung und -Zeitsteurung speichern kann,
b) einen Mikroprozessor (51) an dem entfernten Ort (40, 50, 60), der mit der Fernverbindung (100), der Speichervorrichtung (53) und der Identifiziereinrichtung (46) verbunden ist und der die Funktion hat, die gesendeten vorgespeicherten Sequenzen von der Fernverbindung (100) zu empfangen, sie in der Speichervorrichtung (53) zu speichern, die gespeicherten Sequenzen zu einer späteren Zeit zu laden und die Sequenz rückzuspielen, wodurch die Identifiziereinrichtung (46) gemäß der gespeicherten Sequenz aktiviert wird.

6. Fernbefehlssystem nach einem der vorstehenden Ansprüche, wobei die Identifiziereinrichtung (46) enthält:
mehrere Lampen, die jeweils einer Ferneingabevorrichtung (47) entsprechen, jeweils mit der Basis (20) über die Fernverbindung (100) verbunden sind und an der Basis (20) aktiviert werden können.

7. Fernbefehlssystem nach einem der Ansprüche 1 bis 5, wobei die Identifiziereinrichtung enthält:
einen Kathodenstrahlröhren-Monitor (49), der mit der Basis (20) durch die Fernverbindung (100) verbunden ist und ein Bild von den mehreren Ferneingabevorrichtungen (47) anzeigt und diejenigen Ferneingabevorrichtungen (47) hervorhebt, die gerade aktiviert sind.

## Revendications

1. Système d'instruction à distance pour indiquer les bons dispositifs d'entrée à des sites distants pour activer avec la bonne séquence et le bon minutage comprenant :
a) au moins un site distant (40, 50, 60), chaque site distant comportant :
i. un panneau de commande à distance (41) comportant une pluralité de dispositifs d'entrée à distance (47) ;
ii. chaque dispositif d'entrée à distance (47) comportant un moyen d'identification (46) apte à être activé à distance et fonctionnant chacun de façon à identifier un dispositif d'entrée à distance (47) spécifique ;
b) une liaison à distance (100) connectée au moyen d'identification (46) pour transmettre des informations vers et depuis un site distant (40, 50, 60) ;
c) un site de base (20) connecté à la liaison à distance (100) comportant :
un moyen d'activation pour activer le moyen d'identification correspondant à un dispositif d'entrée à distance spécifié
**caractérisé en ce que** le moyen d'activation comprend :
une pluralité de dispositifs d'entrée de base (37) correspondant chacun à un dispositif d'entrée à distance (47), fonctionnant de façon à activer le moyen d'identification correspondant (46).

2. Système d'instruction à distance selon la revendication 1, comprenant en outre :
un microphone de base (23) situé au site de base (20), pour capter la voix de l'utilisateur de la base ;
une liaison à distance (100) couplée au microphone de base (23) pour transmettre une communication vocale simultanément à la transmission d'autres informations vers et depuis le site distant (40, 50, 60) ; et
un haut-parleur distant (45) couplé à la liaison à distance (100) pour recevoir les communications vocales provenant de la base (20) et les diffuser au site distant (40, 50, 60).

3. Système d'instruction à distance selon la revendication 2, comprenant en outre :
un microphone distant (43) situé dans le site distant (40, 50, 60) pour capter la voix d'un utilisateur distant ;
une liaison à distance (100) couplée au microphone distant (43), pour transmettre une communication vocale simultanément à la transmission des informations effectuée vers et depuis le site distant (40, 50, 60) ;
et un haut-parleur de base (45) couplé à la liaison à distance (100) pour recevoir les communications vocales provenant de la base (20) et les diffuser au site distant (40, 50, 60).

4. Système d'instruction à distance selon l'une quelconque des revendications précédentes comprenant en outre :
a) un dispositif de stockage de base (33) dans le site de base (20) comportant des séquences pré-enregistrées d'activation et de minutage de dispositifs d'entrée à distance ;
b) un microprocesseur (31) dans le site de base (20) couplé au dispositif de stockage (33), une liaison à distance (100) pour recevoir et transmettre les séquences pré-enregistrées d'activation et de minutage de dispositifs d'entrée à distance au site distant (40, 50, 60) via la liaison à distance (100).

5. Système d'instruction à distance selon la revendication 4, comprenant en outre :
a) un dispositif de stockage (53) dans le site distant (40, 50, 60) apte à stocker des séquences d'activation et de minutage d'actionneur ;
b) un microprocesseur (31) dans le site distant (40, 50, 60) couplé à la liaison à distance (100), au dispositif de stockage (53) et au moyen d'identification (46), et dont la fonction est de recevoir les séquences pré-enregistrées transmises par la liaison à distance (100), les stocker dans le dispositif de stockage (53), extraire ultérieurement les séquences stockées, et relire la séquence, activant de ce fait le moyen d'identification (46) selon la séquence stockée.

6. Système d'instruction à distance selon l'une quelconque des revendications précédentes, dans lequel le moyen d'identification (46) comprend : une pluralité de lumières correspondant chacune à un dispositif d'entrée à distance (47), couplées chacune à la base (20) via la liaison à distance (100) et pouvant être activées à la base (20).

7. Système d'instruction à distance selon l'une quelconque des revendications 1 à 5, dans lequel le moyen d'identification comprend :
un moniteur à tube cathodique (49) couplé à la base (20) via la liaison à distance (100) affichant une image de la pluralité de dispositifs d'entrée à distance (47) et mettant en évidence les dispositifs d'entrée à distance (47) qui doivent être actionnés.
